# EUROPÄISCHE PATENTANMELDUNG

(11) **EP 1 100 242 A2**
(43) Veröffentlichungstag der Anmeldung: **16.05.2001**
(21) Anmeldenummer: 00123620.7
(22) Anmeldetag: 28.10.2000
(51) Int. Cl.: H04M 1/27, H04M 1/247

(54) **Verfahren zur dialoggesteuerten Bedienung elektronischer Geräte**

(30) Priorität: 12.11.1999 AT 991910
(71) Anmelder: Siemens AG Österreich, 1211 Wien (AT)
(72) Erfinder: Farahmand, Farschid, 1110 Wien (AT); Forer, Josef, 1060 Wien (AT)
(74) Vertreter: Peham, Alois, Dipl.-Ing.

(57) **Zusammenfassung**

Es wird ein Verfahren zur dialoggesteuerten Bedienung elektronischer Geräte angegeben, bei dem die Rückmeldungen und Fragen des Systemes zu einer bestimmten Teilaufgabe in zumindest zwei unterschiedlichen Varianten angeboten werden.

Damit ist es insbesondere möglich, bei sprachgesteuerten Geräten nach einer Kennlernphase von einer distanzierten Anrede auf eine vertraulichere Form zu wechseln und damit die Benutzerfreundlichkeit des Systemes zu erhöhen.

## Beschreibung

Die Erfindung betrifft ein Verfahren zur dialoggesteuerten Bedienung elektronischer Geräte.

Unter Dialogbetrieb eines Gerätes ist eine Betriebsart zu verstehen, bei der zur Abwicklung eines Auftrages oder einer Aufgabe sich das Stellen von Teilaufgaben und deren Lösungen abwechseln. Das Stellen der Teilaufgaben erfolgt durch den Benutzer beispielsweise durch Texteingabe mittels Tastatur, durch Anwählen bestimmter Symbole auf einem Bildschirm oder durch gesprochene Befehle, die mittels Spracherkennungsverfahren in Steuerungsbefehle umgewandelt werden. Nach der Lösung der entsprechenden Teilaufgabe erhält der Benutzer eine Rückmeldung und ggf. auch Hinweise oder Fragen zur nächsten Teilaufgabe.

Aus der US 5,479,491 oder der EP 0664 635, ist der Einsatz von Spracherkennungssystemen bei dialoggesteuerten Auskunftoder Bestellsystemen bekannt.Ein besonders leistungsfähiges Spracherkennungsverfahren dazu ist in der EP 0 595 889 beschrieben.

Die Benutzerfreundlichkeit eines Dialogsystemes wird neben den Reaktionszeiten des Systemes wesentlich von der Art der vom Benutzer formularbaren Befehle bestimmt.

Der Erfindung liegt die Aufgabe zugrunde, die
Benutzerfreundlichkeit eines Dialogsystemes zu erhöhen.

Dies geschieht erfindungsgemäß mit einem Verfahren zur dialoggesteuerten Bedienung elektronischer Geräte, bei dem die Rückmeldungen und Fragen des Systemes zu einer bestimmten Teilaufgabe in zumindest zwei unterschiedlichen Varianten angeboten werden. Damit kann der Dialog den Kenntnissen des Benutzers über das System angepaßt und optimiert werden.

Vorteilhaft ist es, wenn die Auswahl der für die
Rückmeldungen und Fragen des Systemes zu einer bestimmten Teilaufgabe herangezogenen Variante auf der Grundlage einer vom Benutzer zu tätigenden Eingabe erfolgt. Mit dieser Ausgestaltung kann das Einverständnis des Benutzers beispielsweise beim Wechsel von einem "Anfängerbefehlssatz" zu einem Befehlssatz für "Fortgeschrittene" eingeholt werden und so der Zeitpunkt des Wechsels optimal gestaltet werden.

Günstig ist es, wenn die Auswahl der für die Rückmeldungen und Fragen des Systemes zu einer bestimmten Teilaufgabe herangezogenen Variante zufällig erfolgt.

Vorteilhaft ist es ferner, wenn in die Rückmeldungen und Fragen des Systemes zu einer bestimmten Teilaufgabe vom Benutzer vorgegebene Elemente eingefügt sind.

Bei einer vorteilhaften Ausgestaltung des Verfahrens ist vorgesehen, daß nach der ersten Inbetriebnahme des Systemes eine erste Variante für die Rückmeldungen und Fragen zu einer bestimmten Teilaufgabe herangezogenen wird und daß nach einer vorgegebenen Anzahl von durchgeführten Dialogen für die weiteren Dialoge dem Benutzer die Verwendung einer zweiten Variante für die Rückmeldungen und Fragen angeboten wird.

Die Erfindung ist dann besonders vorteilhaft einsetzbar, wenn der Dialog zumindest teilweise mittels gesprochener Sprache geführt wird.

Die Erfindung wird anhand eines beispielhaften Einsatzes in einem in der Fig. dargestellten Sprachwahlgerät näher erläutert.

Die Funktion dieses Sprachwahlgerätes ist wie folgt:
Bei einem herkömmlichen Telefonendgerät wird bei Abheben des Handapparates (umgangssprachlich: Hörer) durch den Gabeloder Hakenumschalter der Wecker (Klingel) abgeschaltet und der Stromkreis für den Schleifenstrom, der von der Vermittlungsstelle kommt, geschlossen. Bei Geräten, die nach dem Impulswählverfahren arbeiten, wird die mittels Taste oder Wählscheibe gewählte Ziffer in Form von Impulsen, das sind Unterbrechungen des Schleifenstromes von jeweils etwa 50 msec mit Pausen von ebenfalls etwa 50 msec an die Vermittlungsstelle gesendet. Bei Geräten mit Mehrfrequenz-Wähltastatur wird ein 2 aus 4 Code verwendet. Dazu sind zwei Gruppen von je 4 Frequenzen zwischen 697 und 1633 Hz vorgesehen. Beim Druck einer bestimmten Taste werden 2 Frequenzen, je eine aus jeder Gruppe zugleich ausgesendet. Mit diesem Code lassen sich 16 verschiedene Kombinationen bilden, von denen 10 den 10 Ziffern zugeordnet sind.

Das genannte Sprachwahlgerät ist nun über die Analog/Digital-Schnittstelle ADS in die Verbindung zwischen Endgerät und Vermittlungsstelle, die sogenannte Amtsleitung AL geschaltet. Bei Abheben des Hörers wird das Gerät durch den
Schleifenstrom aktiviert.

Ein vom Endgerät ankommendes Signal wird digitalisiert und im Signalprozessor DSP in einem ersten Schritt analysiert, ob es sich um Sprache oder ein Wählsignal bzw. einen Wählton handelt. Liegt ein Wählsignal bzw. ein Wählton vor, dann wird das Sprachwahlgerät über den Steuerungsprozessor UP wieder in den inaktiven Zustand versetzt.

Bei Vorliegen eines Sprachsignales wird hingegen der Erkennungsvorgang im Signalprozessor DSP angestoßen. Dieser verläuft nach dem in der EP 0 595 889 beschriebenen Verfahren zum Erkennen von Einzelwörtern geprochener Sprache, bei dem Korrelationsbeziehungen zwischen den Spektralanteilen des Sprachsignales als worttypische Merkmale ermittelt werden und mittels neuronalem Netzwerk klassifiziert werden.

Wenn solcherart ein vorab eingegebenes, trainiertes Wort erkannt wird, dann wird die diesem Wort zugeordnete Telefonnummer über den Mehrfrequenzsender MFV als Wähltonfolge oder über den Impulssender IPS als
Wählsignalfolge an die Vermittlungsstelle gesendet und damit der Wählvorgang durchgeführt.

Außerdem wird das erkannte Wort über die
Analog/DigitalSchnittstelle A-DS an den Hörer des Telefonendgerätes und/oder über Akustikteil AT und Lautsprecher LS akustisch ausgegeben, und so dem Anrufer eine Rückmeldung über den erfolgreich verlaufenen
Erkennungsvorgang gegeben, bzw. bei einem negativen Ergebnis, wenn keine Übereinstimmung mit einem gespeicherten Referenzmuster festgestellt werden konnte, ein Hinweis, daß die Eingabe wiederholt werden muß.

Das Training der zu erkennenden Wörter erfolgt im sogenannten Lernmodus des Gerätes. Dazu wird die jeweilige Telefonnummer mittels Telefontastatur eingegeben und der dazugehörige Name in den Hörer gesprochen. Dieser Vorgang wird durch gesprochene Hinweise des Gerätes unterstützt.

Als zweckmäßig werden dabei bis zu 50 Einträge d.h. trainierte Worte in das sogenannte Telefonbuch angesehen, wobei auch mehrere Personen erfaßt werden können. Nach erfolgtem Lernvorgang, der auch zur Änderung von Einträgen benutzt werden kann, wird das Gerät wieder in den Normalzustand versetzt und ist damit einsatzbereit.

Zur näheren Erläuterung des erfindungsgemäßen Verfahrens im folgenden den Ablauf des Steuerdialoges beim Lernvorgang zu einem neuen Eintrag, wobei die Spracheingaben des Benutzers und die Sprachmeldungen des Gerätes kursiv dargestellt sind:
Nach dem Abheben des Telefonhörers ertönt ein Aufforderungssignal. Mit dem Anwählen der Nummer 101010 mittels Tastatur wird daraufhin das Hauptbedienungsmenü des Gerätes aufgerufen.

Wenn weniger als 9 Einträge im Telefonbuch frei sind, dann wird vom Gerät eine gesprochene Meldung über die Anzahl der freien Plätze generiert, z.B. " ***6 Plätze frei".***

Danach erfolgt die gesprochene Führung durch das
Funktionsangebot des Menüs.
***"Wenn Sie die Eins wählen, dann können Sie trainieren. Wenn Sie die Zwei wählen, dann ..."***
Die gewünschte Nummer, im Fall des Lernvorganges die Nummer 1 ist daraufhin mittels Tastatur einzugeben.

Das Gerät liefert die Rückmeldungen ***"Trainieren"*** und ***"Wählen Sie die Telefonnummer."***
Die ins Telefonbuch einzutragende Nummer ist mittels Tastatur einzugeben. Das Gerät wiederholt die Nummer und fordert mit der Meldung ***"Mit Null bestätigen."*** zur Bestätigung auf.

Nach Eingabe der Null mittels Tastatur wird die Nummer in das Telefonbuch eingetragen und der Benutzer zur Spracheingabe des zugehörigen Namens aufgefordert. ***"Sprechen Sie den zugehörigen Namen."***

Nach der Eingabe des Namens wie z.B. ***"Sabine"*** fordert das Gerät zumindest einmal zur Wiederholung auf. "Sprechen Sie den zugehörigen Namen.

Mit der Sprachmeldung ***"Fertig"*** wird daraufhin der Lernvorganges mit dem Benutzer abgeschlossen und das Gerät kehrt in das Hauptbedienungsmenü zurück, von dem aus beispielsweise ein weiterer Telefonbucheintrag erfolgen kann. Nach Auflegen des Hörers wird das neuronale Netz gemäß EP 0 595 889 mit den neuen Telefonbucheinträgen trainiert und das Gerät ist für den Wählvorgang mittels gesprochener Sprache einsatzbereit.

Ein bestehender Telefonbucheintrag kann durch weitere Trainingsvorgänge hinsichtlich der Erkennungsqualität verbessert werden, er kann aber damit auch für mehrere Sprecher eingerichtet werden.

Gemäß der Erfindung wird nun nach mehrmaligem Einstieg in das Menü und einer vorgegebenen Anzahl von Wählvorgängen dem Benutzer das Du-Wort angeboten. Wenn der Benutzer dieses Angebot akzeptiert, verwendet das Gerät bei Meldungen von da an als Anrede das vertrauliche **"*Du*"** anstelle des distanzierten ***"Sie".*** So wird beispielsweise anstelle von ***"Wenn Sie die Eins wählen, dann können Sie trainieren. Wenn Sie die Zwei wählen, dann ..."*** die Formulierung ***"Wenn Du die*** ***Eins wählst, dann kannst Du trainieren. Wenn Du die Zwei wählst, dann* ..."** verwendet und die vom Benutzer inzwischen erworbene Vertrautheit im Umgang mit dem Gerät auch sprachlich dokumentiert.

Im deutschen Sprachraum wird die Vertrautheit miteinander sprechender Personen durch Verwendung des Du-Wortes angezeigt. Bei der Verwendung von Steuerdialogen in anderen Sprache kann in analoger Weise von einer distanzierten Anrde in eine vertraute Form gewechselt werden, z.B. durch Verwendung des Vornamens.

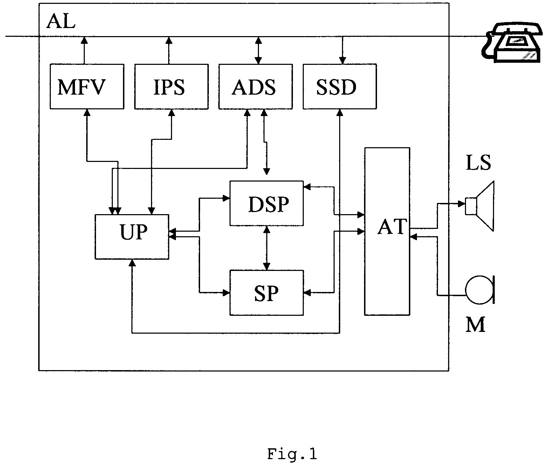

## Patentansprüche

1. Verfahren zur dialoggesteuerten Bedienung elektronischer Geräte **dadurch gekennzeichnet,** daß die Rückmeldungen und Fragen des Systemes zu einer bestimmten Teilaufgabe in zumindest zwei unterschiedlichen Varianten angeboten werden.

2. Verfahren nach Anspruch 1, **dadurch gekennzeichnet,** daß die Auswahl der für die Rückmeldungen und Fragen des Systemes zu einer bestimmten Teilaufgabe herangezogenen Variante auf der Grundlage einer vom Benutzer zu tätigenden Eingabe erfolgt.

3. Verfahren nach Anspruch 1, **dadurch gekennzeichnet,** daß die Auswahl der für die Rückmeldungen und Fragen des Systemes zu einer bestimmten Teilaufgabe herangezogenen Variante zufällig erfolgt.

4. Verfahren nach einem der Ansprüche 1 bis 3, **dadurch gekennzeichnet,** daß in die Rückmeldungen und Fragen des Systemes zu einer bestimmten Teilaufgabe vom Benuzter vorgegebene Elemente eingefügt sind.

5. Verfahren nach einem der Ansprüche 1 bis 4, **dadurch gekennzeichnet,** daß nach der ersten Inbetriebnahme des Systemes eine erste Variante für die Rückmeldungen und Fragen zu einer bestimmten Teilaufgabe herangezogenen wird und daß nach einer vorgegebenen Anzahl von durchgeführten Dialogen für die weiteren Dialoge dem Benutzer die Verwendung einer zweiten Variante für die Rückmeldungen und Fragen angeboten wird.

6. Verfahren nach einem der Ansprüche 1 bis 5, dadurch gekennzeichnet, daß der Dialog zumindest teilweise mittels gesprochener Sprache geführt wird.
